# EUROPEAN PATENT SPECIFICATION

(11) **EP 4 194 186 B1**
(45) Date of publication and mention of the grant of the patent: **28.10.2026**
(21) Application number: 22196999.1
(22) Date of filing: 21.09.2022
(51) Int. Cl.: B29C 73/02, F01D 5/00, C04B 41/00, C04B 41/52, C04B 41/89, C04B 41/91, F01D 5/28

(54) **COMPOSITE COMPONENTS AND METHODS OF REDEFINING OPENINGS IN COMPOSITE COMPONENTS**
VERBUNDKOMPONENTEN UND VERFAHREN ZUR NEUDEFINITION VON ÖFFNUNGEN IN VERBUNDKOMPONENTEN
COMPOSANTS COMPOSITES ET PROCÉDÉS DE REDÉFINITION D'OUVERTURES DANS DES COMPOSANTS COMPOSITES

(30) Priority: 08.11.2021 US 202117521032
(43) Date of publication of application: 14.06.2023
(73) Proprietor: General Electric Company, Evendale, OH 45215 (US)
(72) Inventor: DUNN, Daniel Gene, Niskayuna 12309 (US); WEAVER, Jared Hogg, Niskayuna 12309 (US); DECESARE, Douglas Glenn, Niskayuna 12309 (US); HOCKEMEYER, Matthew, Niskayuna 12309 (US)
(74) Representative: Openshaw & Co.

(56) References cited:
- EP-A1- 3 593 980
- EP-A1- 3 951 136
- GB-A- 2 504 206
- US-A- 5 928 448
- US-A1- 2012 272 637
- US-A1- 2016 003 052
- US-B2- 8 696 842

## Description

### FIELD

The present subject matter relates generally to composite components. More particularly, the present subject matter relates to methods of redefining openings in composite components.

### BACKGROUND

Reinforced ceramic matrix composites ("CMCs") comprising fibers dispersed in continuous ceramic matrices of the same or a different composition are well suited for structural applications because of their toughness, thermal resistance, high-temperature strength, and chemical stability. Such composites typically have high strength-to-weight ratio that renders them attractive in applications in which weight is a concern, such as in aeronautic applications. Their stability at high temperatures renders CMCs very suitable in applications in which components are in contact with a high-temperature gas, such as in a gas turbine engine.

CMCs can have additional surface coatings to protect the composite when used in high temperature, corrosive, and/or other harsh environments. Further, one or more holes or openings may be defined in a CMC, which can present a challenge for repairing a surface coating and/or the underlying CMC. For example, the holes or openings may be kept open during the repair or may be plugged and reopened after the repair, either of which can be difficult. For example, the exact original location of holes or openings that are plugged during the repair must be found to re-open the holes or openings after the repair. Similar repair challenges can exist for other composites. Accordingly, improved methods for repairing CMCs and other composites would be desirable.

EP 3 593 980 A1 relates to the repair of a through-hole in a structure having a composite material, by filling at least a portion of the through hole with potting compound and curing the potting compound.

US 2016/003052 A1 discloses a repair of a through-hole in a structure having a ceramic composite material.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 provides a schematic cross-section view of a gas turbine engine.
FIG. 2A provides a schematic cross-section view of a portion of a composite component having a coating disposed on a surface and having a plurality of openings defined therein perpendicular to the surface.
FIG. 2B provides a schematic cross-section view of a portion of a composite component having a coating disposed on a surface, a plurality of openings defined therein perpendicular to the surface, and a plurality of openings defined therein at a non-zero, non-orthogonal angle to the surface.
FIG. 2C provides a schematic cross-section view of a portion of a composite component having a coating disposed on a surface, a plurality of openings defined therein having a larger cross-sectional area at one end than at an opposite end, and an opening defined therein having a non-round cross-section and not extending through the composite component.
FIG. 2D provides a schematic illustration of the composition of the composite component.
FIG. 3 provides a schematic cross-section view of the portion of the composite component of FIG. 2A having the coating removed from the surface.
FIG. 4 provides a schematic cross-section view of the portion of the composite component of FIG. 3 having the plurality of openings filled in with a filling material.
FIG. 4A provides a schematic illustration of an injection tool injecting the filling material into the plurality of openings.
FIG. 4B provides a schematic illustration of an application tool applying the filling material to the composite component.
FIG. 4C provides a schematic illustration of the composite component with the filling material applied thereto disposed in a pressurizable chamber.
FIG. 4D provides a schematic illustration of the composite component with the filling material applied thereto disposed in a vacuum bag within a vacuum chamber.
FIG. 5 provides a schematic cross-section view of the portion of the composite component of FIG. 4 having a new coating applied to the surface.
FIG. 6 provides a schematic cross-section view of the portion of the composite component of FIG. 5 having the plurality of openings redefined in the composite component.
FIG. 7 provides a flow diagram illustrating a method of redefining openings in a composite component.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosed embodiments.

As used herein, the terms "first," "second," and "third" may be used interchangeably to distinguish one component from another and are not intended to signify location or importance of the individual components.

The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural references unless the context clearly dictates otherwise.

The terms "redefine," "redefining," and the like refer to removing material from a component to define a hole, aperture, or other opening in the **component,** such as through machining (e.g., drilling, electric discharge machining, etc.) or other means for material removal.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. The approximating language may refer to being within a +/- 1, 2, 4, 10, 15, or 20 percent margin in either individual values, range(s) of values, and/or endpoints defining range(s) of values.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Generally, the present subject matter provides methods for redefining openings in composite components. For instance, the present subject matter provides a method of redefining openings in a composite component where openings in the composite component are filled with a material, such as a matrix material, after a surface coating is removed. The composite component is re-coated with a new surface coating, and the openings are redefined in the composite component. The opening filler or matrix material is well-matched to one or more properties of the material of the composite component such that the openings redefined in the composite component do not have to be defined in the exact same location as the original openings. For example, the redefined openings can be defined within a range of distances relative to the respective locations of the original openings. Additionally, or alternatively, the redefined openings can have a different size, shape, and/or pattern relative to the original openings.

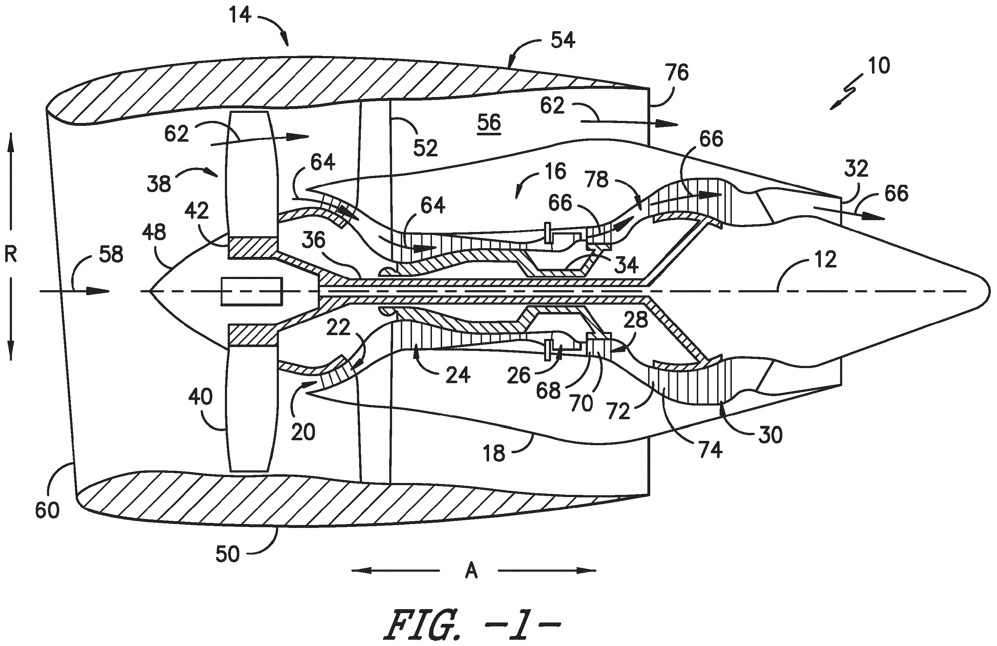

Referring now to the drawings, wherein identical numerals indicate the same elements throughout the figures, FIG. 1 is a schematic cross-sectional view of a gas turbine engine in accordance with an embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. In general, the turbofan engine 10 includes a fan section 14 and a core turbine engine 16 disposed downstream from the fan section 14.

The core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the depicted embodiment, fan section 14 includes a fan 38 having a plurality of fan blades 40 coupled to a disk 42 in a spaced apart manner. As depicted, fan blades 40 extend outward from disk 42 generally along the radial direction R. The fan blades 40 and disk 42 are together rotatable about the longitudinal centerline 12 by LP shaft 36. In some embodiments, a power gear box having a plurality of gears may be included for stepping down the rotational speed of the LP shaft 36 to a more efficient rotational fan speed.

Referring still to the embodiment of FIG. 1, disk 42 is covered by a rotatable front nacelle 48 aerodynamically contoured to promote an airflow through the plurality of fan blades 40. Additionally, the fan section 14 includes an annular fan casing or outer nacelle 50 that circumferentially surrounds the fan 38 and/or at least a portion of the core turbine engine 16. It should be appreciated that nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters turbofan engine 10 through an associated inlet 60 of the nacelle 50 and/or fan section 14. As the volume of air 58 passes across fan blades 40, a first portion of the air 58 as indicated by arrows 62 is directed or routed into the bypass airflow passage 56 and a second portion of the air 58 as indicated by arrows 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan engine 10, also providing propulsive thrust. The HP turbine 28, the LP turbine 30, and the jet exhaust nozzle section 32 at least partially define a hot gas path 78 for routing the combustion gases 66 through the core turbine engine 16.

In some embodiments, components of the turbofan engine 10 may comprise a composite material, such as a ceramic matrix composite (CMC) material, which has high temperature capability. Composite materials generally comprise a fibrous reinforcement material embedded in matrix material, e.g., a ceramic matrix material. The reinforcement material serves as a load-bearing constituent of the composite material, while the matrix of a composite material serves to bind the fibers together and act as the medium by which an externally applied stress is transmitted and distributed to the fibers.

Exemplary CMC materials may include silicon carbide (SiC), silicon, silica, carbon, or alumina matrix materials and combinations thereof. Ceramic fibers may be embedded within the matrix, such as oxidation stable reinforcing fibers including monofilaments like sapphire and silicon carbide (e.g., Textron's SCS-6), as well as rovings and yarn including silicon carbide (e.g., Nippon Carbon's NICALON^{®}, Ube Industries' TYRANNO^{®}, and Dow Corning's SYLRAMIC^{®}), alumina silicates (e.g., 3M's Nextel 440 and 480), and chopped whiskers and fibers (e.g., 3M's Nextel 440 and SAFFIL^{®}), and optionally ceramic particles (e.g., oxides of Si, Al, Zr, Y, and combinations thereof) and inorganic fillers (e.g., pyrophyllite, wollastonite, mica, talc, kyanite, and montmorillonite). For example, in certain embodiments, bundles of the fibers, which may include a ceramic refractory material coating, are formed as a reinforced tape, such as a unidirectional reinforced tape. A plurality of the tapes may be laid up together (e.g., as plies) to form a preform component. The bundles of fibers may be impregnated with a slurry composition prior to forming the preform (e.g., prepreg plies) or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition. In other embodiments, the CMC material may be formed as, e.g., a carbon fiber cloth rather than as a tape.

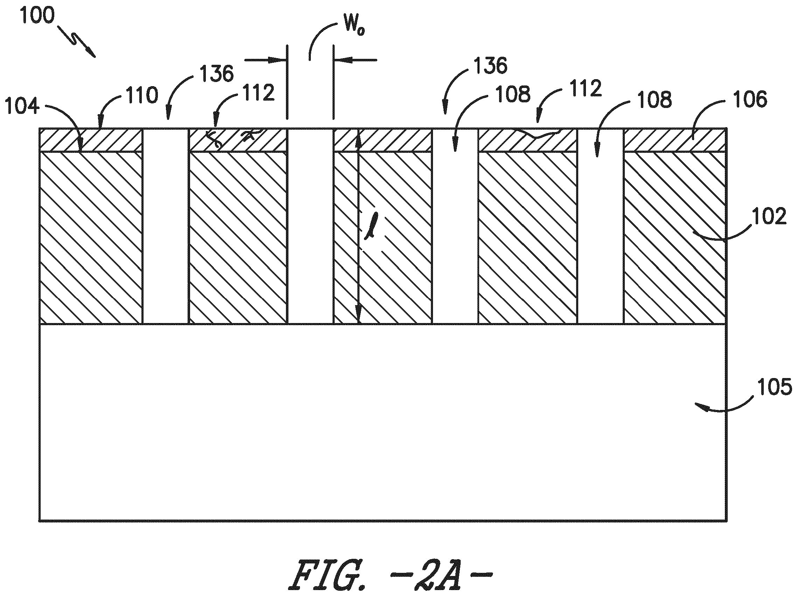

Turning to FIG. 2A, a composite component 100 of a gas turbine engine, such as turbofan engine 10, will be described according to an embodiment of the present subject matter. As schematically illustrated in FIG. 2A, the composite component 100 may be a composite airfoil such as a turbine stator nozzle airfoil. In other embodiments, the composite component 100 may be another composite airfoil, such as an inlet guide vane (IGV), an outlet guide vane (OGV) 52, a rotor blade, etc. or other composite component such as a combustor liner, a fan case, a shroud, a turbine nozzle inner band or outer band, a frame (e.g., a turbine center frame or the like), etc.

The composite component 100 shown in FIG. 2A includes a body 102 defining a surface 104, with an existing coating 106 disposed on the surface 104. A plurality of apertures, holes, or openings 108 are defined through the existing coating 106 into the body 102. The plurality of openings 108 may be cooling holes, openings for instrumentation such as one or more sensors, openings for attachment features, channels, cavities, or the like or combinations thereof. For example, the plurality of openings 108 may be defined in the composite component 100 as cooling holes that allow a cooling fluid to flow from a cavity 105 defined within the composite component 100, through the body 102 and the existing coating 106 to cool the composite component 100, e.g., as the cooling fluid flows through the composite component 100 and/or as the cooling fluid flows over a surface 110 defined by the existing coating 106. However, it will be appreciated that one or more of the openings 108 need not go all the way through the composite component 100, e.g., from the surface 110 to the cavity 105; that is, one or more openings 108 of the plurality of openings 108 may or may not be defined through the composite component 100 to the cavity 105.

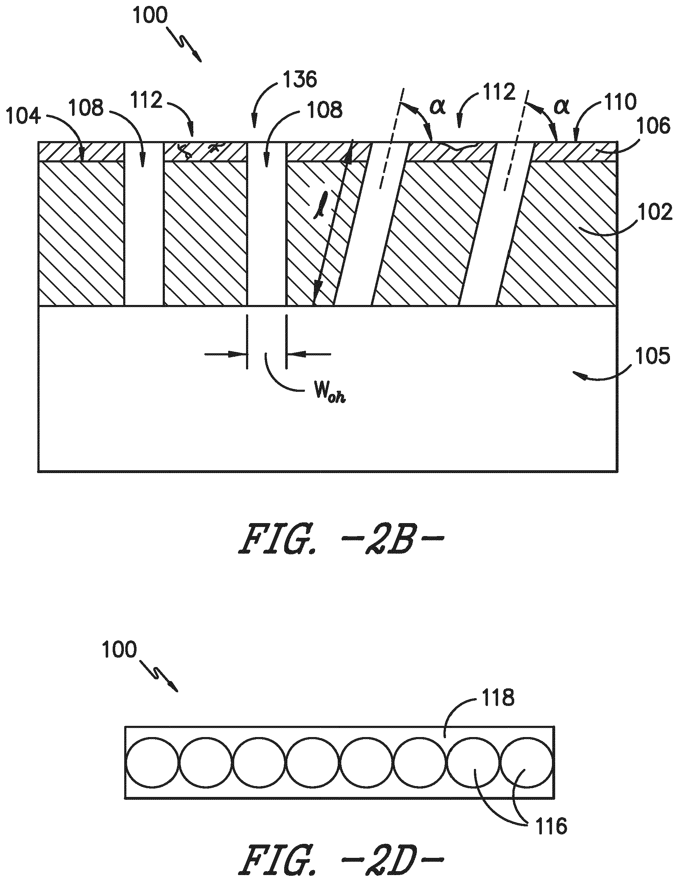

As shown in FIG. 2A, each opening108 has an opening length *l*. The opening length *l* may be the same for each opening 108 or may vary among the plurality of openings 108, e.g., one opening108 may define a shorter path between the cavity 105 and the surface 110 than another opening 108. As further illustrated in FIG. 2A, one or more openings 108 of the plurality of openings 108 may be defined at a substantially orthogonal angle with respect to the body surface 104, i.e., the opening length *l* may extend at a substantially orthogonal angle with respect to surface 104. Additionally, or alternatively, one or more of the openings 108 may have an opening length *l* extending at one or more non-zero and non-orthogonal angles, respectively, to the body surface 104. For example, as shown in FIG. 2B, a portion of the plurality of openings 108 have an opening length *l* extending at a non-zero and non-orthogonal angle α with respect to the surface 104, while the remainder of the openings 108 have an opening length *l* extending substantially orthogonal or perpendicular to the surface 104.

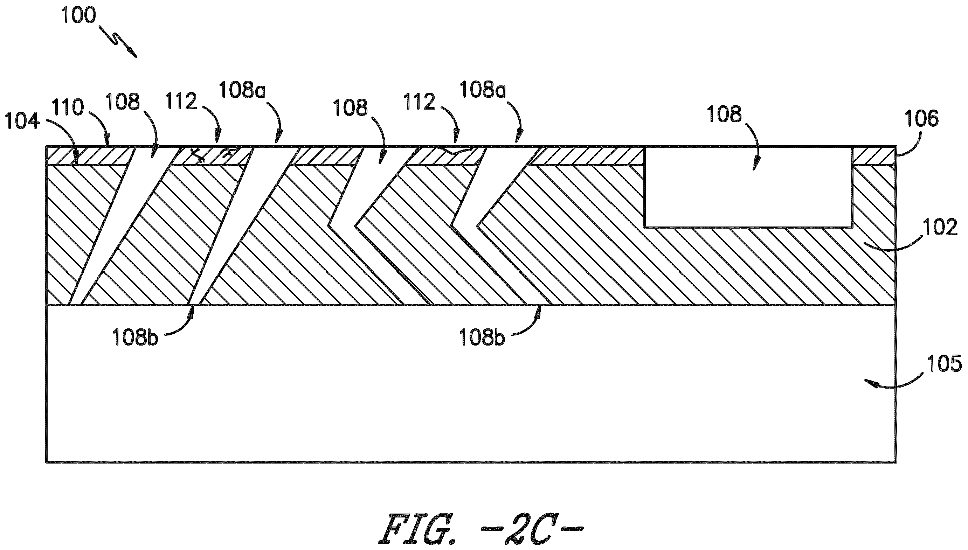

Additionally, or alternatively, one or more of the openings 108 may have a non-constant cross-sectional area and/or one or more of the openings 108 may have a non-round cross-sectional shape. For example, referring to FIG. 2C, the openings 108 depicted that are defined from the surface 110 to the cavity 105 taper from a larger cross-sectional area at the surface 110 to a smaller cross-sectional area at the cavity 105, e.g., the openings 108 defined through the composite component 100 to the cavity 105 have a larger width *wₒ* at the surface 110 than at the cavity 105. Further, the two openings 108 defined approximately in the middle of the illustrated portion of the composite component 100 are non-line of sight openings 108, which comprise a change in direction from an end 108b at the cavity 105 to an end 108a at the surface 110 such that the end 108b of the opening 108 at the cavity 105 is not along a line of sight to the end 108a of the opening 108 at the surface 110. Moreover, FIG. 2C depicts an opening 108 on the right that has a non-round cross-section and that does not extend through the composite component 100 to the cavity 105, e.g., the rightmost opening 108 may be an opening for an attachment feature or the like.

Over time, e.g., after a certain period of use or after an event in which the turbofan engine 10 and/or the composite component 100 is damaged, the existing coating 106 may need to be replaced. For instance, the existing coating 106 may sustain chipping, cracking, abrasion, erosion, recession, or other degradation, illustrated as degraded areas 112 in FIG. 2A, that could hinder the performance or usefulness of the existing coating 106.

In at least some embodiments, the existing coating 106 may be an environmental barrier coating (EBC), which can help protect the composite component body 102 from the harsh environment of, e.g., high temperature engine sections. For example, EBCs can provide a seal against the corrosive gases in the hot combustion environment, which can oxidize silicon-containing CMCs and monolithic ceramics, and EBCs can help prevent dimensional changes in the CMC component due to oxidation and volatilization of silicon oxide in high temperature steam, where silicon oxide can be converted to volatile (gaseous) silicon hydroxide species. Thus, when the EBC sustains chipping, cracking, abrasion, erosion, recession, etc., the EBC may need to be removed and reapplied to continue realizing the benefits of the EBC.

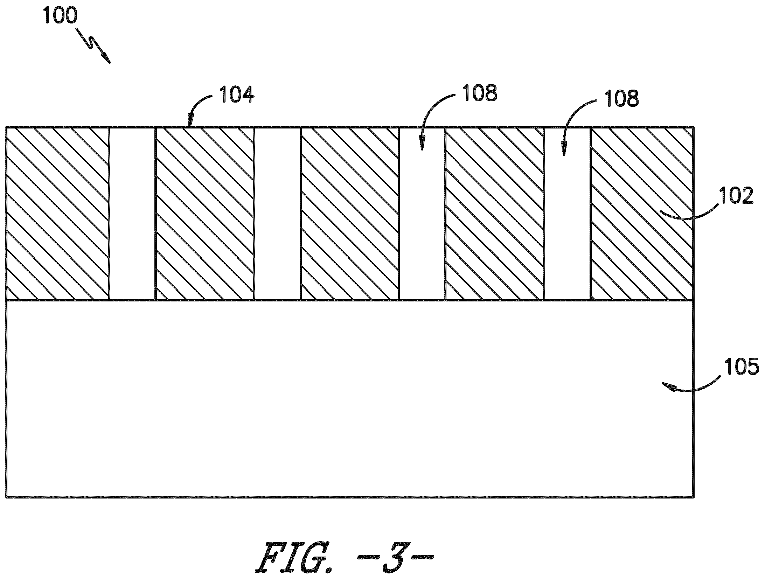

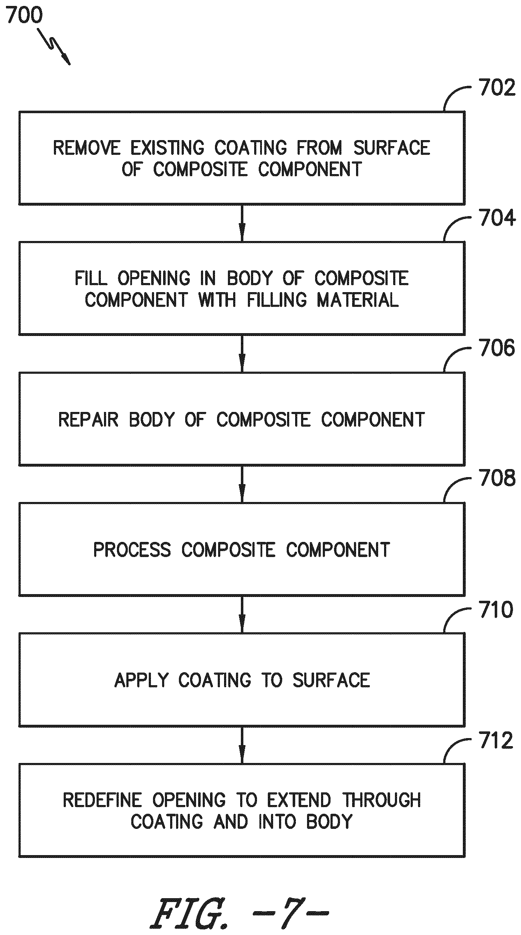

Referring now to FIGS. 3 through 7, various methods of repairing a composite component 100, e.g., by replacing the existing coating 106 with a new coating, are described. For example, FIGS. 3 through 6 provide schematic illustrations of various points in a method 700 of repairing a composite component 100. FIG. 7 provides a flow diagram of the method 700.

As shown in FIG. 7, the method 700 includes (702) removing an existing coating 106 from a surface 104 of the composite component 100. As previously described, the existing coating 106 may become degraded such that the performance or benefits of the coating are diminished or non-existent, and to restore the benefits provided by the coating, it is removed and replaced. In some embodiments, the existing coating 106 may be stripped from the composite component 100 by any suitable chemical or physical process, such as milling or the like. Referring to FIG. 3, removing the existing coating 106 from the composite component 100 exposes the surface 104 of the composite component 100 defined by the body 102.

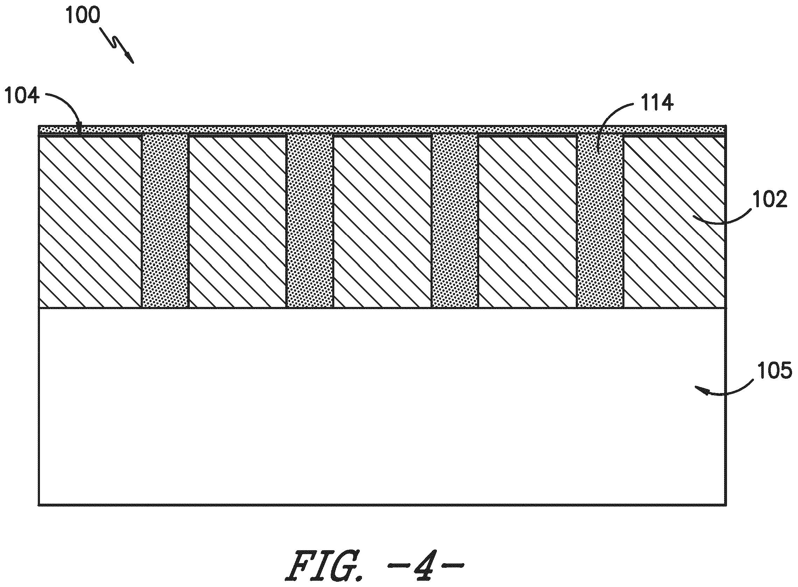

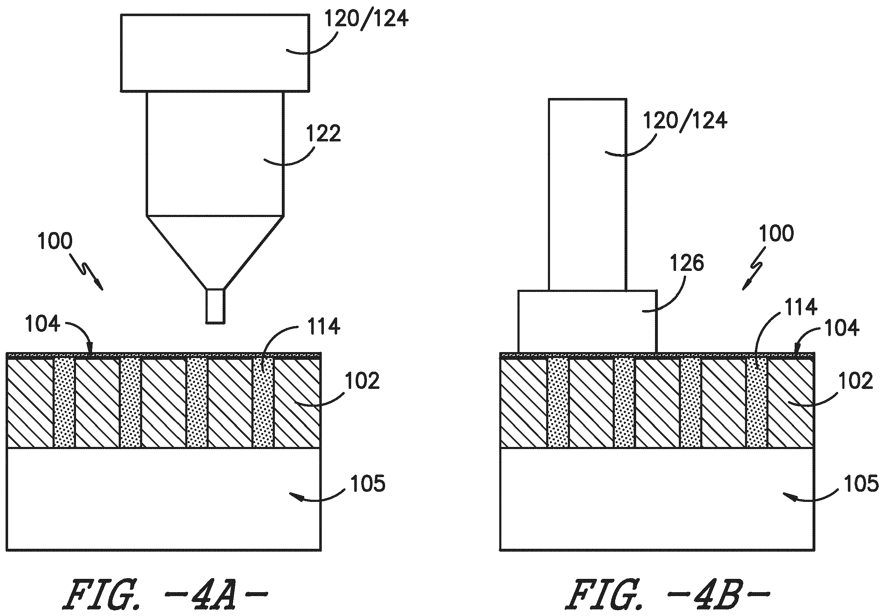

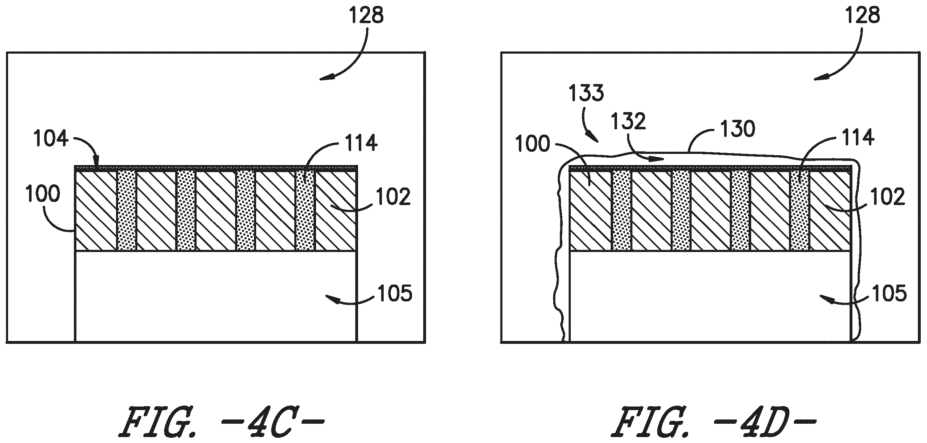

After the existing coating 106 is removed, the method 700 includes (704) filling the plurality of openings 108 with a filling material 114, as shown in FIG. 4. For example, the composite component 100 may be a CMC component comprising a ceramic reinforcement material 116, such as fibers or particles, disposed in a component matrix material 118 as schematically shown in FIG. 2D. The filling material 114 may be a ceramic matrix material comprising a liquid carrier, a filler dispersed within the carrier, and a polymeric binder disposed in the carrier. The liquid carrier may be selected such that it partially or fully dissolves one or more organic components of the formulation, such as the binder. The filler may be fibers and/or a powder and may comprise at least one of silicon, silicon carbide, and carbon. The polymeric binder may be used to alter the flow properties of the filling material 114, such as by thickening the filling material 114 to allow it to remain in place when applied to the composite component 100 as described herein. Optionally, the filling material 114 further comprises other ingredients disposed in the carrier, such as a shrinkage control agent, which provides a measure of rigidity to the formulation as it is processed. For example, the mass loss associated with volatilizing the liquid carrier and converting the binder to char creates a driving force to shrink the size of the remaining material, and excessive shrinkage can lead to undesirable cracking within the product material. Including a shrinkage control agent such as short fibers can provide mechanical support to mitigate the tendency to shrink.

The filling material 114 (e.g., the liquid carrier, the ceramic filler, and/or the polymeric binder forming the filling material 114) may be selected to have substantially similar thermodynamic, physical, and/or chemical properties to the component matrix material 118, e.g., such that the thermodynamic, physical, and/or chemical properties of the filling material 114 are well-matched to the thermodynamic, physical, and/or chemical properties of the component matrix material 118. For instance, the filling material 114 and the component matrix material 118 may have a substantially similar coefficient of thermal expansion, elastic modulus, thermal conductivity, oxidation resistance, material compatibility, and/or chemical composition. As one example, the filling material 114 and the component matrix material 118 may have a material compatibility that helps prevent an unfavorable or undesirable reaction between the filling material 114 and the component matrix material 118. Because the thermodynamic, physical, and/or chemical properties are substantially similar or well-matched, the composite component 100 at the plurality of openings 108 is similar to the remainder of the composite component 100, the openings 108 need not be defined at precisely their original location when the openings 108 are redefined in the composite component 100 after recoating the composite component 100 as described below.

Comparing FIGS. 3 and 4, FIG. 4 illustrates the filling material 114 disposed over the composite component surface 104 and within the plurality of openings 108. The filling material 114 may be a paste, slurry, or other consistency for dispersing within the plurality of openings 108. For instance, a filling material 114 slurry may be formed by mixing a liquid carrier with a ceramic filler and a polymeric binder and, optionally, other ingredients such as, e.g., a shrinkage control agent, etc. It will be appreciated that the filling material 114 need not completely fill each opening 108, i.e., one or more of the openings 108 may be partially filled with the filling material 114 along the length *l* of the opening 108. For example, when the filling material 114 is received in the one or more openings 108, a small depression may be left near the composite component surface 104, e.g., to help locate the openings 108 when redefining the openings 108 as described herein. As another example, one or more openings 108 may not be filled near the end of the respective opening 108 opposite the composite component surface 104, e.g., at or near end 108b illustrated in FIG. 2C.

In some embodiments, filling the plurality of openings 108 with the filling material 114 comprises injecting the filling material 114 into the plurality of openings 108. As schematically shown in FIG. 4A, the filling material 114 may be injected manually, e.g., by a human operator 120 manipulating an injection tool 122 by hand or otherwise to inject the filling material 114 into the openings 108 (FIG. 3), or the filling material 114 may be injected automatically, e.g., by a robot or other automated machine 124 using an injection tool 122 to inject the filling material 114 into the openings 108. It will be appreciated that the filling material 114 may be injected into each opening 108 individually or simultaneously into a plurality of openings 108.

In other embodiments, filling the plurality of openings 108 with the filling material 114 comprises applying the filling material 114 to the surface 104 and over the plurality of openings 108. For example, referring to FIG. 4B, an application tool 126, such as a putty knife or other straight-edge or similar tool, may be used by a human operator 120 to manually apply the filling material 114 over the surface 104, including over the plurality of openings 108 (FIG. 3). As another example, a robot or other automated machine 124 may automatically apply the filling material 114 over the surface 104, including over the plurality of openings 108, using the application tool 126, e.g., a putty knife or other straight-edge or similar tool. In yet other embodiments, rather than or in addition to applying the filling material to the outer surface 104 and over the openings 108, the filling material 114 may be applied to an inner surface, such as the inner surface of the composite component 100 defining the cavity 105, and over the plurality of openings 108.

In still further embodiments, filling the plurality of openings 108 with the filling material 114 comprises applying the filling material 114 to the surface 104, and/or to an inner surface of the composite component 100, and subjecting the composite component 100 to an elevated pressure. For instance, referring to FIG. 4C, after the filling material 114 is applied over the surface 104, including over one or more of the openings 108 (FIG. 3), using the application tool 126 or another suitable tool, the composite component 100 is disposed in an autoclave or other chamber 128. Then, the pressure within the chamber 128 is raised above ambient pressure to force the filling material 114 on the surface 104 into the plurality of openings 108.

In yet other embodiments, filling the plurality of openings 108 with the filling material 114 comprises applying the filling material 114 to the surface 104 (and/or to an inner surface of the composite component 100), placing the composite component 100 within an enclosure, and creating a pressure differential between an interior of the enclosure and an exterior of the enclosure. For example, referring to FIG. 4D, after the filling material 114 is applied over the surface 104, including over one or more of the openings 108, using the application tool 126 or another suitable tool (e.g., as described with respect to FIGS. 4A and 4B), the composite component 100 is disposed in a bag 130 and sealed within the bag 130. As such, the composite component 100 with the filling material 114 is placed within an enclosure, i.e., the bag 130. In some embodiments, a vacuum line is connected to the bag 130 such that a vacuum may be drawn on the bag 130 with the composite component 100 therein, which lowers the pressure in the bag 130 relative to atmospheric pressure outside the bag 130. The pressure differential between an interior 132 of the bag 130 and an exterior 133 of the bag 130 causes the bag 130 to push against the composite component 100 and force the filling material 114 into the openings 108. In further embodiments, the composite component 100, disposed in the bag 130, may be placed in a chamber 128, such as an autoclave or other pressure vessel, and the pressure raised above atmospheric pressure within the chamber 128 to force the filling material 114 on the surface 104 (and/or the inner surface of the composite component 100) into the plurality of openings 108. The bagged composite component 100 may be subjected to the elevated pressure within the chamber 128 with or without a vacuum being pulled on the bag 130. It will be appreciated that, if a vacuum is pulled on the bag 130, thereby lowering the pressure in the interior 132 of the bag 130 below atmospheric pressure, and the bag 130 is disposed in the chamber 128 and the pressure within the chamber 128 raised above atmospheric pressure, the pressure differential between the interior 132 of the bag 130 and the exterior 133 of the bag 130 will be greater than only pulling a vacuum on the bagged composite component 100. In at least some embodiments, the greater compaction pressure provided by the larger pressure differential can help force the filling material 114 into the openings 108 compared to vacuum bagging alone.

As shown in FIG. 7, the method 700 further may include (706) repairing the body 102 of the composite component 100. As previously discussed with reference to FIG. 2B, the composite component 100 may sustain damage, which can produce degraded areas 112 in the existing coating 106 and can also damage the body 102 of the composite component 100. Accordingly, the body 102 may be repaired, e.g., by scarfing or otherwise cleaning out the damaged area(s) and replacing the damaged composite material with new layers of ceramic reinforcement material 116 (e.g., new fibers, etc.), new component matrix material 118, new composite plies, etc., along with replacing the damaged existing coating 106. It will be appreciated that repairing the body 102 need not occur after filling the one or more openings 108 with the filling material 114 as shown in FIG. 7 but, instead, may occur at any appropriate point in the method 700. For instance, in some embodiments, repairing the body 102 may occur after removing the existing coating 106 but prior to filling the one or more openings 108 with the filling material 114.

Keeping with FIG. 7, after the one or more openings 108 are filled with the filling material 114, the method 700 includes (708) processing the composite component 100 having the filled openings 108. For instance, the composite component 100 may undergo burnout (or firing) and densification, e.g., the composite component 100 may be heated (fired) in a vacuum or inert atmosphere to decompose any binders and remove any solvents in the filling material 114 and convert the filling material 114 to the desired ceramic matrix material. Due to decomposition of the binders during burnout, the filling material 114 is porous, and the body 102 of the composite component 100, particularly any areas that may have received new ceramic reinforcement material 116 and/or ceramic matrix material 118, also may have pores or voids therein. Accordingly, the composite component 100 may undergo densification, e.g., melt infiltration (MI), chemical vapor infiltration (CVI), or polymer infiltration and pyrolysis (PIP), to fill the porosity and yield a densified CMC component 100. Specific processing techniques and parameters for the above process will depend on the particular composition of the materials. For example, silicon carbide CMC components may be infiltrated with molten silicon, e.g., through a silicon MI process or a reactive MI process. Other densification techniques include, but are not limited to, PIP processes (e.g., where silicon carbide reinforcement material components are infiltrated with a preceramic polymer, such as polysilazane and then heat treated to form a SiC matrix), oxide/oxide processes (e.g., for aluminum or alumino-silicate reinforcement material components), and CVI processes (e.g., for carbon fiber reinforced silicon carbide matrix (C/SiC) CMCs, for SiC/SiC CMCs, etc.).

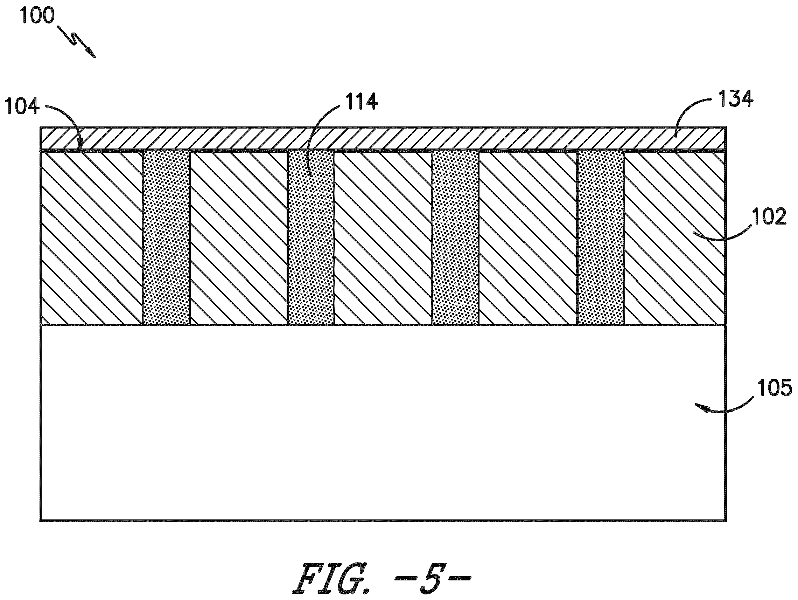

As further shown in FIG. 7, the method 700 includes (710) applying a new coating 134 to the surface 104. As shown in FIG. 5, the new coating 134 is applied over the surface 104 and the openings 108 filled with the filling material 114. The new coating 134 may be, e.g., a new EBC or other surface coating, and may be applied using any suitable application method. For instance, the new coating 134 may be applied as a thermal spray, such as an air plasma spray, or a slurry coating, e.g., using a dip and spin application technique.

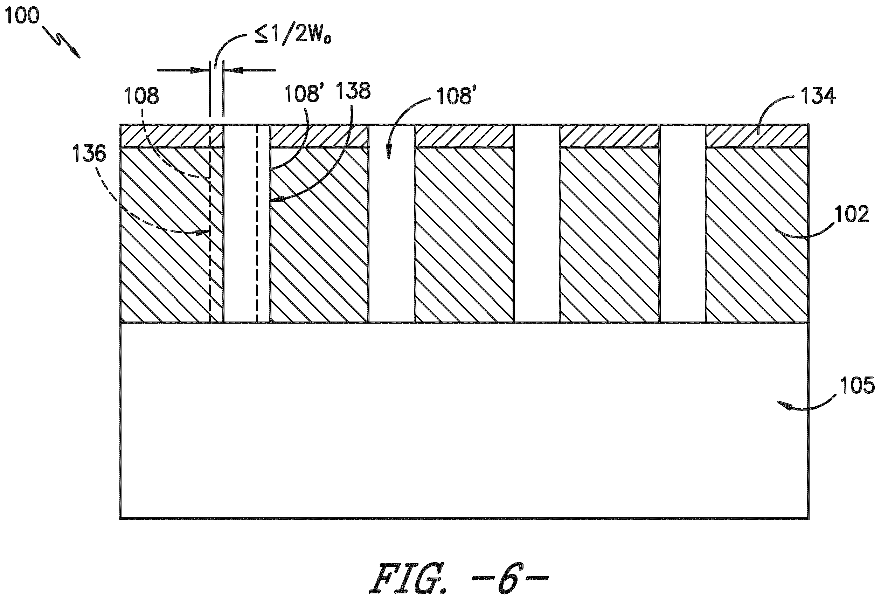

Referring still to FIG. 7, the method 700 includes (712) redefining at least one opening 108 of the plurality of openings 108 such that a new, redefined opening 108' extends through the new coating 134 and into the body 102 of the composite component 100, as shown in FIG. 6. The opening(s) 108 may be redefined as new opening(s) 108', e.g., by drilling, electric discharge machining (EDM), laser drilling, or any suitable means for defining a hole, aperture, or other opening in the composite component 100.

It will be appreciated that the redefined opening(s) 108' may be referred to as new opening(s) 108' because the original plurality of openings 108 were filled with the filling material 114 such that the new opening(s) 108' need not be redefined in precisely the same location, orientation, size, shape, number, and/or pattern as the original openings 108. For example, referring back to FIG. 2A, each existing or original opening 108 of the plurality of openings 108 has an original width *wₒ* and is defined at an original location 136 in the body 102 of the composite component 100, prior to filling the existing or original opening 108 with the filling material 114 as described herein. The original width *wₒ* may be within a range of about 6 mils (0,15mm) to about 160 mils (4,06mm) such as within a range of about 40 mils (1,02mm) to about 120 mils (3,05mm) and such as within a range of about 60 mils (1,52 mm) to about 100 mils (2,54mm). For example, the low end of the range of original width *wₒ* may be about the thickness of a single CMC ply. As described herein, e.g., with respect to FIG. 2C, the original width *wₒ* of each opening 108 may vary along the length *l* of the original opening 108, or the cross-sectional area of the original opening 108 may vary along its length *l*.

In at least some embodiments, redefining the opening 108 in the body 102 comprises redefining the opening 108 (as a new opening 108') at a new location 138 that may be, e.g., within one-half the original width *wₒ* (1/2 *wₒ*) of the original location 136. For instance, in FIG. 6, an original opening 108 is shown in phantom or dashed lines, with a new opening 108' shown in solid lines. As indicated, the difference in location between the new opening 108' and the original opening 108 is up to one-half the original width *wₒ*. For example, for an original opening 108 having an original width *wₒ* of 100 mils (2,54 mm) and defined at an original location 136, the redefined or new opening 108' is defined at a new location 138 within 50 mils (1,27 mm) of the original location 136. In at least some embodiments, the new opening(s) 108' are defined at the respective original location 136 of each opening 108.

Further, a new opening 108' may be defined in the same orientation as the respective original opening 108, e.g., the new opening 108' may be defined at the same angle to the surface 104 as the respective original opening 108. Additionally, or alternatively, one or more new openings 108' may be defined at different orientations than the respective original opening 108, e.g., one or more new openings 108' may be defined at a different angle to the surface 104 than the respective original opening 108. As further examples, one or more new openings 108' may be defined with a different width or cross-sectional area as the respective original opening 108 and/or the new openings 108' may be defined in a different pattern in the composite component 100 compared to the original openings 108. Further, the width or cross-sectional area of each new opening 108' may vary in the same manner or in a different manner as a respective original opening 108.

Accordingly, as described herein, the present subject matter provides methods of redefining one or more openings in composite components and composite components having one or more redefined openings therein. For instance, the present subject matter provides for filling in openings of a composite component with a matrix material to provide a relatively pristine surface for re-coating the composite component in a repair process. That is, the matrix material fills openings defined in the composite component to restore a surface of the composite component to an uninterrupted state to accept a coating on the surface and then the openings are redefined in the composite component. The matrix material may have one or more properties that are substantially similar to the properties of the composite component material such that when the openings are redefined in the composite component, the alignment of the openings does not have to exactly match the original positions of the openings. Other advantages of the subject matter described herein also may be realized by those of ordinary skill in the art.

Further aspects of the disclosure are provided by the subject matter of the following clauses:
A method comprising filling an opening with a filling material, the opening defined in a body of a composite component and opening onto a surface defined by the composite component; and redefining the opening such that the opening extends into the body, wherein the composite component is a ceramic matrix composite component comprising ceramic reinforcement material disposed in a component matrix material.

The method of any preceding clause, further comprising applying a coating to the surface after filling the opening with the filling material.

The method of any preceding clause, further comprising removing an existing coating from the surface of the composite component prior to filling the opening with the filling material.

The method of any preceding clause, further comprising adding ceramic reinforcement material, component matrix material, or both in the body of the composite component.

The method of any preceding clause, wherein the opening is defined at an original location in the body prior to filling the opening with the filling material, and wherein redefining the opening comprises redefining the opening at a new location.

The method of any preceding clause, wherein the opening has an original width, and wherein the new location is within one-half the original width of the original location.

The method of any preceding clause, wherein filling the opening with the filling material comprises injecting the filling material into the opening.

The method of any preceding clause, wherein filling the opening with the filling material comprises applying the filling material to the surface and over the opening.

The method of any preceding clause, wherein filling the opening with the filling material comprises applying the filling material to the surface, placing the composite component with the filling material applied thereto within an enclosure, and creating a pressure differential between an interior of the enclosure and an exterior of the enclosure.

The method of any preceding clause, wherein the enclosure is a bag.

The method of any preceding clause, wherein the enclosure is a bag, and wherein creating the pressure differential between the interior of the enclosure and the exterior of the enclosure comprises drawing a vacuum on the bag.

The method of any preceding clause, wherein the enclosure is a bag, and further comprising disposing within a chamber the composite component with the filling material applied thereto that is placed within the bag.

The method of any preceding clause, wherein creating the pressure differential between the interior of the enclosure and the exterior of the enclosure comprises raising the pressure within the chamber.

The method of any preceding clause, wherein the filling material has substantially similar thermodynamic, physical, and chemical properties to the component matrix material, and wherein the substantially similar thermodynamic, physical, and chemical properties are at least one of coefficient of thermal expansion, elastic modulus, thermal conductivity, oxidation resistance, material compatibility, and chemical composition.

The method of any preceding clause, wherein the opening has a length extending substantially orthogonal to the surface.

The method of any preceding clause, wherein the opening has a length extending at a non-zero and non-orthogonal angle to the surface.

The method of any preceding clause, wherein the opening has a width within a range of about 6 mils (0,15mm) to about 160 mils (4,06mm)

The method of any preceding clause, wherein the opening has a width within a range of about 40 mils (1,02mm) to about 120 mils (3,05 mm).

The method of any preceding clause, wherein the opening has a width within a range of about 60 mils (1,52mm) to about 100 mils (2,54 mm).

The method of any preceding clause, wherein the composite component is an airfoil, shroud, combustor liner, turbine nozzle band, or frame and the opening is a cooling hole.

The method of any preceding clause, wherein the existing coating is an environmental barrier coating.

The method of any preceding clause, wherein the opening filled with the filling material is an original opening and the redefined opening is a new opening, and wherein the new opening is defined at a different location than the original opening.

The method of any preceding clause, wherein the original opening is a plurality of original openings and the new opening is a plurality of new openings, and wherein the plurality of new openings are defined in a different pattern than the plurality of original openings.

The method of any preceding clause, wherein the original opening is a plurality of original openings and the new opening is a plurality of new openings, and wherein at least one new opening of the plurality of new openings has different dimensions from an original opening of the plurality of original openings.

The method of any preceding clause, wherein the original opening is a plurality of original openings and the new opening is a plurality of new openings, and wherein at least one new opening of the plurality of new openings has a different cross-sectional shape from an original opening of the plurality of original openings.

The method of any preceding clause, wherein the original opening is a plurality of original openings and the new opening is a plurality of new openings, and wherein the plurality of new openings is different in number from the plurality of original openings.

A method comprising removing an existing coating from a surface of a ceramic matrix composite component; filling an opening with a filling material, the opening defined in a body of the ceramic matrix composite component and opening onto the surface; applying a new coating to the surface; and redefining the opening such that the opening extends through the new coating and into the body.

The method of any preceding clause, wherein the filling material comprises a liquid carrier, a filler dispersed within the liquid carrier, and a polymeric binder disposed in the liquid carrier.

The method of any preceding clause, wherein the filler comprises at least one of silicon, silicon carbide, and carbon.

The method of any preceding clause, wherein the opening has a width within a range of about 6 mils (0,15 mm) to about 160 mils (4,06 mm).

The method of any preceding clause, wherein the opening has a width within a range of about 40 mils (1,02mm) to about 120 mils (3,05 mm).

The method of any preceding clause, wherein the opening has a width within a range of about 60 mils (1,52 mm) to about 100 mils. mils (2,54 mm).

The method of any preceding clause, wherein the opening is defined at an original location in the body prior to filling the opening with the filling material, and wherein redefining the opening comprises redefining the opening within one-half the width of the original location.

A composite component comprising a ceramic matrix composite body having a surface; a coating on the surface; an original opening defined through the body, the original opening filled with a filling material; and a new opening defined through the coating into the body, wherein the original opening is defined at an original location in the body, and wherein the new opening is defined at a new location.

The composite component of any preceding clause, wherein the original opening has an original width, and wherein the new location is within one-half the original width of the original location.

This written description uses examples to disclose embodiments of the disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims or if they include equivalent structural elements with insubstantial differences from the literal language of the claims.

## Claims

1. A method (700), comprising:
filling (704) an opening (108) with a filling material (114), the opening (108) defined in a body (102) of a composite component (100) and opening onto a surface (104) defined by the composite component (100);
applying (710) a coating (134) to the surface (104) after filling the opening (108) with the filling material (114); and
redefining (712) the opening (108') such that the opening (108') extends into the body (102),
wherein the composite component (100) is a ceramic matrix composite component comprising ceramic reinforcement material (116) disposed in a component matrix material (118);
wherein the opening (108) is defined at an original location (136) in the body (102) prior to filling (704) the opening (108) with the filling material (114), and wherein redefining (712) the opening (108') comprises redefining the opening (108') at a new location (138).

2. The method of any preceding claim, further comprising:
removing (702) an existing coating (106) from the surface (104) of the composite component (100) prior to filling (704) the opening (108) with the filling material (114).

3. The method of any preceding claim, further comprising:
adding ceramic reinforcement material (116), component matrix material (118), or both in the body (102) of the composite component (100).

4. The method of claim 1, wherein the opening (108) has an original width (*wₒ*), and wherein the new location (138) is within one-half the original width (*wₒ*) of the original location (136).

5. The method of any preceding claim, wherein filling (704) the opening (108) with the filling material (114) comprises injecting the filling material (114) into the opening (108).

6. The method of any preceding claim, wherein filling (704) the opening (108) with the filling material (114) comprises applying the filling material (114) to the surface (104) and over the opening (108).

7. The method of any preceding claim, wherein filling (704) the opening (108) with the filling material (114) comprises applying the filling material (114) to the surface (104), placing the composite component (100) with the filling material (114) applied thereto within an enclosure (130), and creating a pressure differential between an interior (132) of the enclosure (130) and an exterior (133) of the enclosure (130).

8. The method of any preceding claim, wherein the filling material (114) has substantially similar thermodynamic, physical, and chemical properties to the component matrix material (118), and wherein the substantially similar thermodynamic, physical, and chemical properties are at least one of coefficient of thermal expansion, elastic modulus, thermal conductivity, oxidation resistance, material compatibility, or chemical composition.

9. The method of any preceding claim, wherein the opening (108) has a length (*l*) extending substantially orthogonal to the surface (104).

10. The method of any preceding claim, wherein the opening (108) has a length (*l*) extending at a non-zero and non-orthogonal angle (α) to the surface (104).

11. The method of any preceding claim, wherein the opening (108) has a width (*wₒ*) within a range of about 6 mils to about 160 mils.

12. The method of any preceding claim, wherein the composite component (100) is an airfoil, shroud, combustor liner, turbine nozzle band, or frame and the opening (108) is a cooling hole.

13. The method of any preceding claim, wherein the existing coating (106) is an environmental barrier coating.

## Patentansprüche

1. Verfahren (700), umfassend:
Ausfüllen (704) einer Öffnung (108) mit einem Füllmaterial (114), wobei die Öffnung (108) in einem Körper (102) einer Verbundkomponente (100) definiert wird und sich auf eine Oberfläche (104) hin öffnet, die durch die Verbundkomponente (100) definiert wird;
Auftragen (710) einer Beschichtung (134) auf die Oberfläche (104) nach dem Ausfüllen der Öffnung (108) mit dem Füllmaterial (114); und
Neudefinieren (712) der Öffnung (108'), so dass sich die Öffnung (108') in den Körper (102) hinein erstreckt,
wobei die Verbundkomponente (100) eine Keramikmatrix-Verbundkomponente ist, die ein Keramikverstärkungsmaterial (116) umfasst, das in einem Komponentenmatrixmaterial (118) angeordnet ist;
wobei die Öffnung (108) an einer ursprünglichen Stelle (136) in dem Körper (102) vor dem Ausfüllen (704) der Öffnung (108) mit dem Füllmaterial (114) definiert wird, und wobei das Neudefinieren (712) der Öffnung (108') das Neudefinieren der Öffnung (108') an einer neuen Stelle (138) umfasst.

2. Verfahren nach einem der vorhergehenden Ansprüche, ferner umfassend:
Entfernen (702) einer vorhandenen Beschichtung (106) von der Oberfläche (104) der Verbundkomponente (100) vor dem Ausfüllen (704) der Öffnung (108) mit dem Füllmaterial (114).

3. Verfahren nach einem der vorhergehenden Ansprüche, ferner umfassend:
Hinzufügen von Keramikverstärkungsmaterial (116), von Komponentenmatrixmaterial (118) oder beiden zu dem Körper der Verbundkomponente (100).

4. Verfahren nach Anspruch 1, wobei die Öffnung (108) eine ursprüngliche Breite (wₒ) aufweist, und wobei sich die neue Stelle (138) innerhalb der Hälfte der ursprünglichen Breite (wₒ) der ursprünglichen Stelle (136) befindet.

5. Verfahren nach einem der vorhergehenden Ansprüche, wobei das Ausfüllen (704) der Öffnung (108) mit dem Füllmaterial (114) das Einspritzen des Füllmaterials (114) in die Öffnung (108) umfasst.

6. Verfahren nach einem der vorhergehenden Ansprüche, wobei das Ausfüllen (704) der Öffnung (108) mit dem Füllmaterial (114) das Auftragen des Füllmaterials (114) auf die Oberfläche (104) und über die Öffnung (108) umfasst.

7. Verfahren nach einem der vorhergehenden Ansprüche, wobei das Ausfüllen (704) der Öffnung (108) mit dem Füllmaterial (114) das Auftragen des Füllmaterials (114) auf die Oberfläche (104), das Anordnen der Verbundkomponente (100) mit dem darauf aufgetragenen Füllmaterial (114) in eine Einfassung (130) und das Erstellen einer Druckdifferenz zwischen dem Inneren (132) der Einfassung (130) und einem Äußeren (133) der Einfassung (130) umfasst.

8. Verfahren nach einem der vorhergehenden Ansprüche, wobei das Füllmaterial (114) im Wesentlichen ähnliche thermodynamische, physikalische und chemische Eigenschaften wie das Komponentenmatrixmaterial (118) aufweist, und wobei die im Wesentlichen ähnlichen thermodynamischen, physikalischen und chemischen Eigenschaften mindestens eines von: einem Wärmeausdehnungskoeffizienten, einem Elastizitätsmodul, einer Wärmeleitfähigkeit, einer Oxidierungsbeständigkeit, einer Materialkompatibilität oder einer chemischen Zusammensetzung sind.

9. Verfahren nach einem der vorhergehenden Ansprüche, wobei die Öffnung (108) eine Länge (l) aufweist, die sich zu der Oberfläche (104) im Wesentlichen orthogonal erstreckt.

10. Verfahren nach einem der vorhergehenden Ansprüche, wobei die Öffnung (108) eine Länge (l) aufweist, die sich in einem nicht orthogonalen Winkel (α) ungleich null zu der Oberfläche (104) erstreckt.

11. Verfahren nach einem der vorhergehenden Ansprüche, wobei die Öffnung (108) eine Breite (wₒ) in einem Bereich von etwa 6 mils bis etwa 160 mils aufweist.

12. Verfahren nach einem der vorhergehenden Ansprüche, wobei die Verbundkomponente (100) eine Tragfläche, ein Deckband, eine Brennkammerauskleidung, ein Turbinendüsenband oder ein Rahmen ist, und die Öffnung (108) eine Kühlöffnung ist.

13. Verfahren nach einem der vorhergehenden Ansprüche, wobei die vorhandene Beschichtung (106) eine Umweltdämmschicht ist.

## Revendications

1. Procédé (700), comprenant les étapes consistant à :
remplir (704) une ouverture (108) avec un matériau de remplissage (114), l'ouverture (108) étant définie dans un corps (102) d'un composant composite (100) et s'ouvrant sur une surface (104) définie par le composant composite (100) ;
appliquer (710) un revêtement (134) à la surface (104) après le remplissage de l'ouverture (108) avec le matériau de remplissage (114) ; et
redéfinir (712) l'ouverture (108') de sorte que l'ouverture (108') s'étend dans le corps (102),
dans lequel le composant composite (100) est un composant composite à matrice céramique comprenant un matériau de renforcement céramique (116) disposé dans un matériau de matrice de composant (118) ;
dans lequel l'ouverture (108) est définie à un emplacement d'origine (136) dans le corps (102) avant le remplissage (704) de l'ouverture (108) avec le matériau de remplissage (114), et dans lequel la redéfinition (712) de l'ouverture (108') comprend la redéfinition de l'ouverture (108') à un nouvel emplacement (138).

2. Procédé selon l'une quelconque des revendications précédentes, comprenant en outre :
le retrait (702) d'un revêtement (106) existant de la surface (104) du composant composite (100) avant le remplissage (704) de l'ouverture (108) avec le matériau de remplissage (114).

3. Procédé selon l'une quelconque des revendications précédentes, comprenant en outre :
l'ajout d'un matériau de renforcement céramique (116), d'un matériau de matrice de composant (118) ou des deux dans le corps (102) du composant composite (100).

4. Procédé selon la revendication 1, dans lequel l'ouverture (108) présente une largeur d'origine (wₒ), et dans lequel le nouvel emplacement (138) est compris dans une moitié de la largeur d'origine (wₒ) de l'emplacement d'origine (136).

5. Procédé selon l'une quelconque des revendications précédentes, dans lequel le remplissage (704) de l'ouverture (108) avec le matériau de remplissage (114) comprend l'injection du matériau de remplissage (114) dans l'ouverture (108).

6. Procédé selon l'une quelconque des revendications précédentes, dans lequel le remplissage (704) de l'ouverture (108) avec le matériau de remplissage (114) comprend l'application du matériau de remplissage (114) à la surface (104) et sur l'ouverture (108).

7. Procédé selon l'une quelconque des revendications précédentes, dans lequel le remplissage (704) de l'ouverture (108) avec le matériau de remplissage (114) comprend l'application du matériau de remplissage (114) à la surface (104), le placement du composant composite (100) avec le matériau de remplissage (114) appliqué à celui-ci dans une enceinte (130), et la création d'un différentiel de pression entre un intérieur (132) de l'enceinte (130) et un extérieur (133) de l'enceinte (130).

8. Procédé selon l'une quelconque des revendications précédentes, dans lequel le matériau de remplissage (114) présente des propriétés thermodynamiques, physiques et chimiques substantiellement similaires au matériau de matrice de composant (118), et dans lequel les propriétés thermodynamiques, physiques et chimiques substantiellement similaires correspondent à au moins un élément parmi : un coefficient de dilatation thermique, un module d'élasticité, une conductivité thermique, une résistance à l'oxydation, une compatibilité de matériaux ou une composition chimique.

9. Procédé selon l'une quelconque des revendications précédentes, dans lequel l'ouverture (108) présente une longueur (l) s'étendant de manière substantiellement orthogonale à la surface (104).

10. Procédé selon l'une quelconque des revendications précédentes, dans lequel l'ouverture (108) présente une longueur (l) s'étendant selon un angle (α) différent de zéro et non orthogonal à la surface (104).

11. Procédé selon l'une quelconque des revendications précédentes, dans lequel l'ouverture (108) présente une largeur (wₒ) dans une plage d'environ 6 mils à environ 160 mils.

12. Procédé selon l'une quelconque des revendications précédentes, dans lequel le composant composite (100) est une surface portante, une virole, une chemise de dispositif de combustion, une bande de buse de turbine ou un cadre, et l'ouverture (108) est un trou de refroidissement.

13. Procédé selon l'une quelconque des revendications précédentes, dans lequel le revêtement (106) existant est un revêtement formant barrière environnementale.
